# EUROPÄISCHE PATENTSCHRIFT

(11) **EP 1 044 795 B1**
(45) Veröffentlichungstag und Bekanntmachung des Hinweises auf die Patenterteilung: **30.05.2012**
(21) Anmeldenummer: 00106777.6
(22) Anmeldetag: 30.03.2000
(51) Int. Cl.: B61D 17/04, E04C 2/30, F16B 5/08, B23K 26/00

(54) **Flächenhaftes Bauelement, insbesondere für Verkleidungen von Wagenkästen von Schienenfahrzeugen und ein Verfahren zur Herstellung eines solchen flächenhaften Bauelements**
Two-dimensional construction element, in particular for vehicle bodies of railway vehicles, and process for its production
Elément de construction en nappe, particulièrement pour caisses de véhicule de véhicules ferroviaires, et procédé pour sa fabrication

(30) Priorität: 12.04.1999 DE 19916287
(43) Veröffentlichungstag der Anmeldung: 18.10.2000
(73) Patentinhaber: ALSTOM Transport Deutschland GmbH, 38239 Salzgitter (DE)
(72) Erfinder: Strothmann, Martin, Dipl.-Ing., 38302 Wolfenbüttel (DE); Grüning, Hans, 38259 Salzgitter (DE); Hohenstein, Michael, 38226 Salzgitter (DE); Brzezinka, Hagen, Dipl.-Ing., 38226 Salzgitter (DE); Winkler, Joachim, Dipl.-Ing., 38231 Gross Denkte (DE)
(74) Vertreter: Lieb, Fabian

(56) Entgegenhaltungen:
- EP-A- 0 495 429
- EP-A- 0 697 318
- DE-A- 2 050 575
- DE-C- 19 521 892

## Beschreibung

Die Erfindung betrifft ein flächenhaftes Bauelement, insbesondere für Verkleidungen von Wagenkästen von Schienenfahrzeugen, mit den im Oberbegriff des Anspruchs 1 genannten Merkmalen, und ein Verfahren zur Herstellung eines solchen flächenhaften Bauelementes mit den im Oberbegriff des Anspruchs 6 genannten Merkmalen.

Flächenhafte Bauelemente der genannten Art sind bekannt und werden beispielsweise zur Konstruktion einer Dach-, Stirn- oder Seitenwand des Wagenkastens verwendet. Die Bauelemente weisen dabei zusätzliche Aussparungen auf, die beispielsweise zur Aufnahme von Fenstern, Dachluken, Türen, Klimageräten oder dergleichen dienen können. Weiterhin ist bekannt, diese Aussparungen als Zugangsöffnungen für Versorgungs- und Steuerungsleitungen zu nutzen.

In dem Bauelement treten im Bereich einer Ecke der Aussparungen, aufgrund während eines Betriebes des Schienenfahrzeugs entstehender Zug- und Druckkräfte, sehr hohe Spannungen auf. Diese Spannungen können ausgehend von der Ecke der Aussparung zu einer Rißbildung im Bauelement führen. Zur Vermeidung solcher Rißbildungen ist es bisher bekannt, die Ecke abgerundet mit einem Radius auszuführen. Dies kann nicht nur als optisch störend empfunden werden, sondern führt häufig auch zu zeit- und kostenintensiveren nachfolgenden Fertigungsschritten, wie beispielsweise einem aufwendigeren Zuschnitt eines Fensters.

Der Erfindung liegt die Aufgabe zugrunde, einen Bereich des Bauelementes, der die Ecke der Aussparung umfaßt, derart auszugestalten, daß eine Rißbildung infolge der Zug- und Druckkräfte verhindert wird. Dabei soll es in einfacher Weise ermöglicht werden, die Ecke der Aussparung im wesentlichen rechtwinklig auszugestalten.

Erfindungsgemäß wird diese Aufgabe durch das flächenhafte Bauelement und das Verfahren zur Herstellung eines solchen Bauelementes mit den Merkmalen der Ansprüche 1 und 6 gelöst. Dadurch, daß im Bereich (Verstärkungsbereich) der wenigstens einen rechtwinkligen Ecke das Bauelement aus einem Material höherer Festigkeit besteht als in den übrigen Bereichen des Bauelementes, kann wirkungsvoll eine Rißbildung verhindert werden. Damit läßt sich ein Fertigungsablauf des Wagenkastens von Schienenfahrzeugen zeit- und kostengünstiger gestalten.

Weiterhin ist bevorzugt, mehrere Verstärkungsbereiche über Stege miteinander zu verbinden, so daß in einem Verstärkungsbereich auftretende Zug- und Druckkräfte entlang dieser Stege abgeleitet werden können. In einer bevorzugten Ausgestaltung werden die Verstärkungsbereiche eines Bauelementes in Längsrichtung über die Stege miteinander verbunden, so daß sich insgesamt ein sich in Längsrichtung des Bauelementes erstreckender Fenstersteg ergibt. Damit bestehen auch die Seitenkanten der Aussparungen aus einem Material höherer Festigkeit, und eine zusätzliche Verstärkung dieser Bauteile ist nicht mehr notwendig.

Die Herstellung eines solchen Bauelementes kann vorteilhaft derart gestaltet werden, daß zunächst die Verstärkungsbereiche in ein flächenhaftes Bauteil integriert werden. Dazu können beispielsweise mit geeigneten Schneid- oder Stanzwerkzeugen Aussparungen in das Bauteil eingebracht werden. In diese Aussparungen wird dann das den Verstärkungsbereich bildende Material, beispielsweise ein Material höherer Festigkeit oder größerer Dicke, eingebracht und mittels eines geeigneten Fügeverfahrens, wie beispielsweise Kleben, Schweißen, insbesondere Laserschweißen, Löten oder Falzen, mit dem Bauteil verbunden. Anschließend wird die gewünschte Aussparung mittels Schneid- oder Stanzwerkzeugen erzeugt und zwar so, daß die Ecken der Aussparung in dem Verstärkungsbereich liegen.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Draufsicht auf eine Aussparung in einem Bauelement mit Verstärkungsbereichen und
- Figur 2: eine schematische Draufsicht auf eine Aussparung in einem Bauelement mit zwei Fensterstegen.

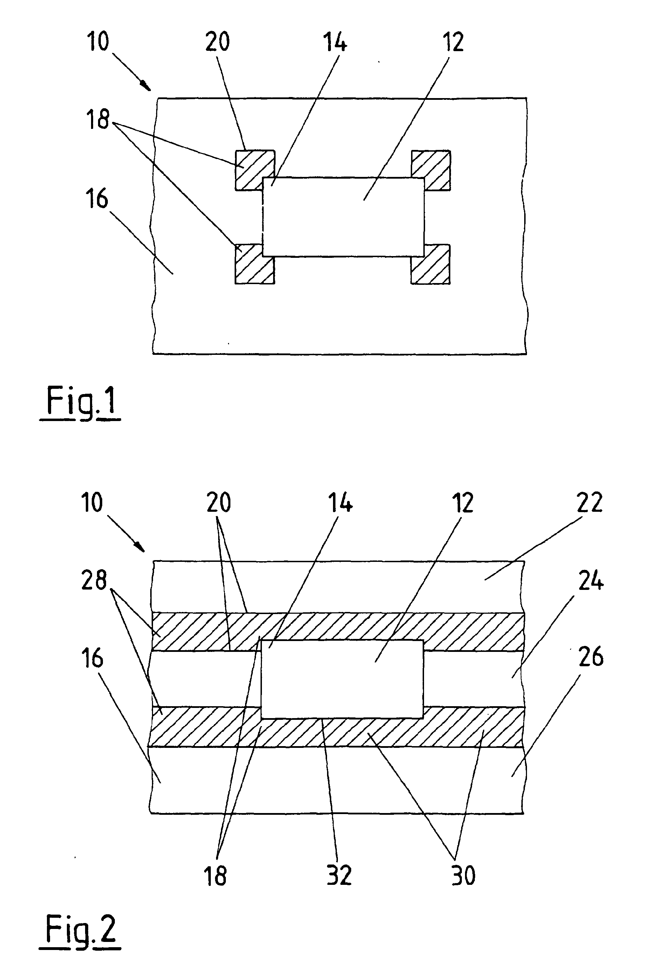

Die Figur 1 zeigt in einer schematischen Draufsicht ein Bauelement 10, wie es insbesondere für Verkleidungen von Wagenkästen in Schienenfahrzeugen verwendet wird. Ein solches Bauelement 10 kann beispielsweise bei einer Fertigung einer Dach-, Stirn- oder Seitenwand des Wagenkastens eingesetzt werden. Das Bauelement 10 weist eine Aussparung 12 auf, die in einem die Aussparung 12 umfassenden Bauteil 16 angeordnet ist. Die Aussparung 12 besitzt in diesem Ausführungsbeispiel vier im wesentlichen rechtwinklige Ecken 14. In einem Bereich jeder der Ecken 14 der Aussparung 12 besitzt das Bauelement 10 zusätzliche Verstärkungsbereiche 18. Solche Aussparungen 12 dienen zur Aufnahme von Fenstern, Dachluken, Türen, Klimageräten oder auch als Zugangsöffnung für Versorgungs- und Steuerungsleitungen. Denkbar ist auch, solcherart verstärkte Aussparungen 12 als eine Halterung für Lang- oder Querträger sowie zur Tankbefestigung zu nutzen.

Infolge eines Betriebs des Schienenfahrzeugs treten Zug- und Stoßkräfte auf, die insbesondere ausgehend von den Ecken 14 der Aussparung 12 zu einer Rißbildung in dem Bauelement 10 führen können. Indem im Verstärkungsbereich 18 ein Material verwendet wird, das eine höhere Festigkeit besitzt als ein Material für das Bauteil 16, kann die Rißbildung wirkungsvoll verhindert werden.

Eine Ausgestaltung der Verstärkungsbereiche 18 ist in einem hohen Maße variabel. So kann der Verstärkungsbereich 18 beispielsweise eine von dem Bauteil 16 verschiedene Materialdicke aufweisen. Weiterhin erschöpft sich die Ausgestaltung der Verstärkungsbereiche 18 in ihrer Formvielfalt nicht auf die hier dargestellten weitestgehend rechteckigen Formen, sondern die Verstärkungsbereiche 18 können ebenso rund oder vieleckig ausgestaltet sein. Wichtig ist lediglich, daß sie die Ecken 14 der Aussparung 12 umgreifen.

In Figur 2 ist in schematischer Weise eine alternative Ausgestaltung des die Verstärkungsbereiche 18 tragenden Bauelements 10 dargestellt. Die einzelnen Verstärkungsbereiche 18 werden hierbei in Längsrichtung des Bauelementes 10 durch Stege 30 miteinander verbunden, so daß insgesamt zwei Fensterstege 28 ausgebildet werden. Das Bauteil 16 des Bauelements 10 ist somit dreigeteilt in einen oberen, mittleren und unteren Abschnitt 22, 24, 26. Durch die Fensterstege 28 können insbesondere die in den Ecken 14 angreifenden Zug- und Druckkräfte aufgenommen werden und gegebenenfalls auf geeignete Stützstrukturen übertragen werden. Weiterhin besitzt eine solche Aussparung 12 mindestens eine Seitenkante 32, die ebenso aus einem Material höherer Festigkeit besteht. Selbstverständlich lassen sich solche Stege 30 auch in Quererstreckung des Bauelementes 10 verwirklichen, so daß die Aussparung 12 eine vollständig verstärkte Umlaufkante besitzt. Damit sind zusätzliche Verstärkungen in diesen Breiten nicht mehr notwendig.

Eine Herstellung der Bauelemente 10 kann gemäß der folgenden Fertigungsschritte erfolgen:

In einem ersten Fertigungsschritt werden in das flächenhafte Bauteil 16 Aussparungen eingebracht, die das zur Ausbildung der Verstärkungsbereiche 18 notwendige Material aufnehmen sollen. Je nachdem, ob das Bauelement 10 lediglich in den Ecken 14 der Aussparung 12 die Verstärkungsbereiche 18 tragen soll oder diese auch über die Stege 30 in Längsrichtung des Bauelementes 10 zu den Fensterstegen 28 verbunden werden sollen, eignen sich unterschiedliche Schneid- oder Stanzverfahren für einen solchen Fertigungsschritt. So ist es sinnvoll, bei der Herstellung eines Bauelements 10 gemäß der Figur 2 das Bauteil 16 zunächst in Längsrichtung in die drei Abschnitte 22, 24, 26 aufzuteilen.

Denkbar ist aber auch, das Bauelement 10 mit nur einem Fenstersteg 28 auszuführen, so daß das Bauteil 16 in zwei Abschnitte gegliedert ist.

In einem zweiten Fertigungsschritt wird das Material höherer Festigkeit in die Aussparungen eingebracht und/oder zwischen den Abschnitten des Bauteils 16 angeordnet. Bei dem Ausführungsbeispiel gemäß Figur 2 liegen dann zwischen dem mittleren Abschnitt 24 und den Abschnitten 22, 26 jeweils ein Fenstersteg 28.

In einem dritten Fertigungsschritt werden die Verstärkungsbereiche 18 beziehungsweise die Fensterstege 28 entlang einer Verbindungslinie 20 mit dem Bauteil 16 durch geeignete Fügeverfahren verbunden. Beispielsweise eignen sich thermische Fügeverfahren, wie Löten, Aufschmelzen und Schweißen, insbesondere Laserschweißen, oder auch Heiß- und Kaltklebetechniken. Eine Verbindung kann aber auch durch mechanische Fügeverfahren, wie Nieten oder Falzen, erfolgen.

In einem vierten Fertigungsschritt wird die Aussparung 12 entsprechend den vorgegebenen Maßen ausgestanzt oder ausgeschnitten. Dabei liegen die Ecken 14 in den Verstärkungsbereichen 18 und in dem Ausführungsbeispiel gemäß Figur 2, ebenso die Seitenkanten 32. Besonders bevorzugt ist es, diesen Fertigungsschritt mittels Laserschnitt durchzuführen, da sich ein solches Verfahren in einfacher Weise automatisieren läßt.

### Bezugszeichenliste

- 10: Bauelement
- 12: Aussparung
- 14: Ecken
- 16: Bauteil
- 18: Verstärkungsbereiche
- 20: Verbindungslinie
- 22: oberer Abschnitt
- 24: mittlerer Abschnitt
- 26: unterer Abschnitt
- 28: Fenstersteg
- 30: Steg
- 32: Seitenkante

## Patentansprüche

1. Verfahren zur Herstellung eines flächenhaften Bauelements (10) für Verkleidungen von Wagenkästen von Fahrzeugen, insbesondere Schienenfahrzeugen mit wenigstens einer, mindestens eine im Wesentlichen rechtwinklige Ecke (14) aufweisende Aussparung (12), **dadurch gekennzeichnet, dass**
a) in einem ersten Fertigungsschritt wenigstens eine Aussparung, die zur Ausbildung eines Verstärkungsbereiches (18) dient, in ein flächenhaftes Bauteil (16) gestanzt oder geschnitten wird oder dass das Bauteil (16) in wenigstens zwei Abschnitte in Längsrichtung des Bauelementes (10) mittels eines Schneidverfahrens aufgeteilt wird;
b) in einem zweiten Fertigungsschritt ein Material höherer Festigkeit als das Material des Bauteils (16) in die wenigstens eine Aussparung eingebracht wird oder zwischen den wenigstens zwei Abschnitten des Bauteils (16) angeordnet wird;
c) in einem dritten Fertigungsschritt die Verstärkungsbereiche (18) entlang einer Verbindungslinie (20) mit dem Bauteil (16) mittels eines Fügeverfahrens, insbesondere Laserschweißen, verbunden werden und
d) in einem vierten Fertigungsschritt wenigstens eine Aussparung (12) mittels Schneid- oder Stanzverfahren, insbesondere Laserschnitt, erzeugt wird, wobei die Ecken (14) der Aussparung (12) in den Verstärkungsbereichen (18) angeordnet sind.

2. Verfahren nach Anspruch 1, **dadurch gekennzeichnet, dass** in dem ersten Fertigungsschritt das Bauteil (16) in einen oberen, mittleren und unteren Abschnitt (22, 24, 26) aufgeteilt wird und dass in dem zweiten Fertigungsschritt zwischen dem mittleren Abschnitt (24) und den Abschnitten (22, 26) jeweils ein Fenstersteg (28) angeordnet wird, der die Verstärkungsbereiche (18) beinhaltet.

## Claims

1. Method for producing a flat construction element (10) for facings of bodies of vehicles, particularly rail vehicles, comprising at least one cutout (12) having at least one substantially right-angled corner (14), **characterised in that**
a) in a first manufacturing step at least one cutout which serves for forming a reinforcement area (18) is punched or cut into a flat component (16), or **in that** the component (16) is divided into at least two portions in the longitudinal direction of the construction element (10) by means of a cutting process;
b) in a second manufacturing step a material of higher strength than the material of the component (16) is introduced into the at least one cutout or is arranged between the at least two portions of the component (16);
c) in a third manufacturing step the reinforcement areas (18) are connected to the component (16) along a connecting line (20) by means of a joining process, particularly laser welding, and
d) in a fourth manufacturing step at least one cutout (12) is created by means of a cutting or punching process, particularly laser cutting, the corners (14) of the cutout (12) being arranged in the reinforcement areas (18).

2. Method according to claim 1, **characterised in that** in the first manufacturing step the component (16) is divided into an upper, middle and lower portion (22, 24, 26), and **in that** in the second manufacturing step a window web (28) which contains the reinforcement areas (18) is arranged between the middle portion (24) and each of the portions (22, 26).

## Revendications

1. Procédé de fabrication d'un élément de construction plan (10) pour des habillages de caisses de véhicules, en particulier de véhicules ferroviaires, comportant au moins un évidement (12) qui présente au moins un coin sensiblement à angle droit (14), **caractérisé en ce que**
a) dans une première étape de fabrication, au moins un évidement servant à former une zone de renforcement (18) est réalisé par poinçonnage ou découpe dans une pièce plane (16) ou bien la pièce (16) est divisée en au moins deux segments par un procédé de découpe dans le sens longitudinal de l'élément de construction (10) ;
b) dans une deuxième étape de fabrication, un matériau ayant une résistance supérieure à celle du matériau de la pièce (16) est introduit dans ledit au moins un évidement ou bien disposé entre lesdits au moins deux segments de la pièce (16) ;
c) dans une troisième étape de fabrication, les zones de renforcement (18) sont reliées à la pièce (16) le long d'une ligne de joint (20) par un procédé d'assemblage, en particulier par soudage au laser ; et
d) dans une quatrième étape de fabrication, au moins un évidement (12) est réalisé par un procédé de découpe ou de poinçonnage, en particulier par découpe au laser, les coins (14) de l'évidement (12) étant disposés dans les zones de renforcement (18).

2. Procédé selon la revendication 1, **caractérisé en ce que**, dans la première étape de fabrication, la pièce (16) est divisée en un segment supérieur, central et inférieur (22, 24, 26) et, dans la deuxième étape de fabrication, un longeron de fenêtre (28) contenant les zones de renforcement (18) est respectivement disposé entre le segment central (24) et chacun des segments (22, 26).
